# FASCICULE DE BREVET EUROPEEN

(11) **EP 3 888 971 B1**
(45) Date de publication et mention de la délivrance du brevet: **24.07.2024**
(21) Numéro de dépôt: 21020169.5
(22) Date de dépôt: 30.03.2021
(51) Int. Cl.: B60N 2/56, B60N 2/58

(54) **MATELASSURE POUR SIÈGE DE VÉHICULE AUTOMOBILE**
POLSTERUNG FÜR EINEN KRAFTFAHRZEUGSITZ
CUSHION FOR A MOTOR VEHICLE SEAT

(30) Priorité: 30.03.2020 FR 2003130
(43) Date de publication de la demande: 06.10.2021
(73) Titulaire: TESCA Pacific, 92977 Paris La Défense Cedex (FR)
(72) Inventeur: BENLAGHA, Mohamed, 92977 Paris La Défense Cedex (FR); PUIG, Lluis, 92977 Paris La Défense Cedex (FR)
(74) Mandataire: Sayettat, Julien Christian

(56) Documents cités:
- WO-A1-2015/024154
- US-A- 6 093 910
- US-A1- 2013 075 381
- US-A1- 2014 097 651
- US-B2- 10 602 609

## Description

L'invention concerne une matelassure pour siège de véhicule automobile et un siège comprenant une telle matelassure.

Il est connu, par exemple du document US-6 093 910, de réaliser une matelassure pour siège de véhicule automobile, ladite matelassure comprenant :
- un bloc de rembourrage élastiquement compressible,
- une coiffe souple de revêtement dudit bloc,
- un circuit électrique à base d'encre conductrice imprimée en envers de ladite coiffe, ledit circuit comprenant au moins une bande de conduction électrique,
- au moins un fil conducteur de connexion dudit circuit à un dispositif électrique.

Il est connu d'associer le fil, en particulier par une de ses extrémités, à une bande de conduction de diverses manières, notamment au moyen d'une colle conductrice ou par l'entremise d'une cosse agencée pour prendre en pincement ladite bande, ceci afin de permettre la transmission du courant entre ledit fil et ladite bande.

Cependant, une telle façon de procéder peut s'avérer complexe à mettre en oeuvre et/ou de robustesse insuffisante face aux sollicitations en traction et en vibrations exercées dans la zone d'association entre le fil et le circuit, notamment lorsque le siège est occupé par un passager.

L'invention a pour but de pallier ces inconvénients.

A cet effet, l'invention propose une matelassure pour siège de véhicule automobile, ladite matelassure comprenant :
- un bloc de rembourrage élastiquement compressible,
- une coiffe souple de revêtement dudit bloc,
- un circuit électrique à base d'encre conductrice imprimée en envers de ladite coiffe, ledit circuit comprenant au moins une bande de conduction électrique,
- au moins un fil conducteur de connexion dudit circuit à un dispositif électrique, ledit fil présentant une partie s'étendant au-delà de ladite bande de manière à pouvoir être connecté audit dispositif,
ledit fil présentant en outre une partie associée à ladite bande par piqûre au moyen d'une aiguille, selon une pluralité de points, de ladite partie au travers de ladite bande.

Avec l'agencement proposé, on dispose d'une association du fil à la bande simple à mettre en oeuvre et présentant une grande robustesse face aux sollicitations en étirement et vibrations auxquels elle est soumise.

Selon un autre aspect, l'invention propose un siège comprenant une telle matelassure.

D'autres particularités et avantages de l'invention apparaîtront dans la description qui suit, faite en référence aux figures jointes, dans lesquelles :

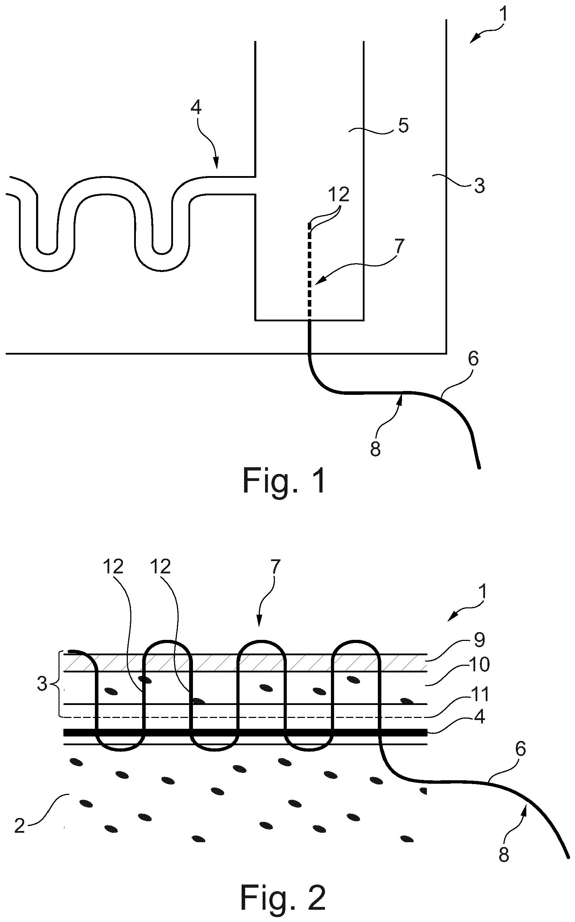

[Fig.1] est une vue schématique partielle de face d'un envers de coiffe pour une matelassure selon une réalisation,
[Fig.2] est une vue schématique en coupe partielle d'une matelassure pourvue de la coiffe de la figure 1.

En référence aux figures, on décrit une matelassure 1 pour siège de véhicule automobile, ladite matelassure comprenant :
- un bloc 2 de rembourrage élastiquement compressible,
- une coiffe 3 souple de revêtement dudit bloc,
- un circuit électrique 4 à base d'encre conductrice imprimée en envers de ladite coiffe, ledit circuit comprenant au moins une bande 5 de conduction électrique,
- au moins un fil 6 conducteur de connexion dudit circuit à un dispositif électrique,
ledit fil présentant :
- une partie 7 associée à ladite bande par piqûre au moyen d'une aiguille, selon une pluralité de points 12, de ladite partie au travers de ladite bande,
- une partie 8 s'étendant au-delà de ladite bande de manière à pouvoir être connecté audit dispositif.

On donne ci-après des exemples de circuits électriques 4 utilisables pour la mise en oeuvre de l'invention :
- un réseau de bandes imprimées d'acheminement du courant et un réseau de pastilles imprimées alimentées par lesdites bandes, lesdites pastilles étant intégrées dans des capteurs de détection de la présence d'un passager sur la matelassure ; un tel circuit est destiné notamment à être connecté à un dispositif électrique d'analyse de données,
- un réseau de bandes imprimées résistives, par exemple en forme de tortillons, formant des résistances électriques destinées à chauffer la matelassure, lesdites bandes résistives se raccordant par leurs extrémités à des bandes imprimées de conduction du courant ; un tel circuit est destiné notamment à être connecté à un dispositif électrique formé par un générateur de courant.

L'encre conductrice est notamment imprimée par sérigraphie.

Selon la réalisation représentée, la coiffe 3 est à base d'un complexe comprenant, associées successivement l'une à l'autre :
- une couche de revêtement 9, par exemple en tissu ou en cuir,
- une sous-couche de confort 10 en mousse souple,
- une sous-couche d'envers 11 en tricot sur laquelle est imprimé le circuit électrique 4.

L'utilisation d'un tel tricot pour la couche d'envers 11 permet de conférer à la coiffe 3 une bonne élasticité et une capacité à laisser passer l'air et l'humidité, ce qui est favorable au confort tactile et hygrothermique de la matelassure 1.

Selon la réalisation représentée, la piqûre est faite selon toute l'épaisseur de la coiffe 3.

La piqûre est positionnée notamment en partie non visible de la matelassure, notamment en sa périphérie dans la zone d'interface entre l'assise et le dossier du siège.

Selon une réalisation, le fil 6 de connexion est en métal.

Selon une autre réalisation, le fil 6 de connexion est à base de matériau plastique, par exemple du polyester, recouvert de métal, par exemple de l'argent.

Dans tous les cas, le fil 6 peut être composé d'une pluralité de fibres entortillés les uns avec les autres, lesdites fibres étant métalliques ou à base de matériau plastique recouvert de métal.

Dans ce dernier cas, il peut être prévu, notamment lorsque le fil 6 de connexion est destiné à connecter un circuit chauffant à une batterie, de réaliser l'alimentation électrique par une pluralité de fils 6 afin de minimiser la résistance électrique au passage du courant.

Selon une réalisation non représentée, la piqûre est réalisée en zigzags de manière à renforcer l'association entre le fil 6 et la bande 5 de conduction.

De façon non représentée, la face d'envers de la coiffe 3 peut être pourvue d'une couche de protection recouvrant le circuit 4, ladite couche étant par exemple à base d'un vernis, de silicone ou encore d'un film plastique, ce qui permet de bloquer la piqûre et d'améliorer le contact entre le fil 6 et la bande 5 de conduction.

Selon une réalisation, l'encre conductrice comprend une matrice à base de polyuréthanne dans laquelle sont dispersées des particules conductrices.

Selon une réalisation, la coiffe 3 est chaussée sur le bloc 2 de rembourrage.

Selon une autre réalisation, la coiffe 3 est surmoulée, au moins en partie, par le bloc 2 de rembourrage, ledit bloc étant à base de mousse moulée.

On décrit enfin, de façon non représentée, un siège de véhicule automobile comprenant une telle matelassure 1, ladite matelassure étant montée sur une nappe de suspension solidaire de l'armature dudit siège.

## Revendications

1. Matelassure (1) pour siège de véhicule automobile, ladite matelassure comprenant :
• un bloc (2) de rembourrage élastiquement compressible,
• une coiffe (3) souple de revêtement dudit bloc,
• un circuit électrique (4) à base d'encre conductrice imprimée en envers de ladite coiffe, ledit circuit comprenant au moins une bande (5) de conduction électrique,
• au moins un fil (6) conducteur de connexion dudit circuit à un dispositif électrique, ledit fil présentant une partie (8) s'étendant au-delà de ladite bande de manière à pouvoir être connecté audit dispositif,
ladite matelassure étant **caractérisée en ce que** ledit fil présente en outre une partie (7) associée à ladite bande par piqûre au moyen d'une aiguille, selon une pluralité de points (12), de ladite partie au travers de ladite bande.

2. Matelassure selon la revendication 1, **caractérisée en ce que** la coiffe (3) est à base d'un complexe comprenant, associées successivement l'une à l'autre :
• une couche de revêtement (9),
• une sous-couche de confort (10) en mousse souple,
• une sous-couche d'envers (11) en tricot sur laquelle est imprimé le circuit électrique.

3. Matelassure selon l'une des revendications 1 ou 2, **caractérisée en ce que** la piqûre est faite selon toute l'épaisseur de la coiffe (3).

4. Matelassure selon l'une quelconque des revendications 1 à 3, **caractérisée en ce que** le fil (6) de connexion est en métal.

5. Matelassure selon l'une quelconque des revendications 1 à 3, **caractérisée en ce que** le fil (6) de connexion est à base de matériau plastique recouvert de métal.

6. Matelassure selon l'une quelconque des revendications précédentes, **caractérisée en ce que** la piqûre est réalisée en zigzags de manière à renforcer l'association entre le fil (6) et la bande (5) de conduction.

7. Matelassure selon l'une quelconque des revendications précédentes, **caractérisée en ce que** la face d'envers de la coiffe (3) est pourvue d'une couche de protection recouvrant le circuit (4).

8. Matelassure selon l'une quelconque des revendications 1 à 7, **caractérisée en ce que** la coiffe (3) est chaussée sur le bloc (2) de rembourrage.

9. Matelassure selon l'une quelconque des revendications 1 à 7, **caractérisée en ce que** la coiffe (3) est surmoulée, au moins en partie, par le bloc (2) de rembourrage, ledit bloc étant à base de mousse moulée.

10. Siège de véhicule automobile comprenant une matelassure selon l'une quelconque des revendications précédentes, ladite matelassure étant montée sur une nappe de suspension solidaire de l'armature dudit siège.

## Patentansprüche

1. Sitzpolster (1) für einen Kraftfahrzeugsitz, wobei die Polsterung Folgendes umfasst:
• einen Block (2) aus einer elastisch komprimierbaren Polsterung,
• eine weiche Abdeckung (3) zum Überziehen des Blocks,
• einen elektrischen Schaltkreis (4) auf der Basis von leitfähiger Tinte, der auf der Rückseite der Abdeckung aufgedruckt ist, wobei der Schaltkreis mindestens ein elektrisches Leitungsband (5) umfasst,
• mindestens einen leitenden Draht (6) zum Verbinden des Schaltkreises mit einer elektrischen Vorrichtung, wobei der Draht einen Teil (8) aufweist, der sich über das Band hinaus erstreckt, so dass er mit der Vorrichtung verbunden werden kann,
wobei das Sitzpolster **dadurch gekennzeichnet ist, dass** der Draht ferner einen Teil (7) aufweist, der mit dem Band durch Durchstechen des Teils durch das Band mittels einer Nadel entlang einer Vielzahl von Punkten (12) verbunden ist.

2. Sitzpolster nach Anspruch 1, **dadurch gekennzeichnet, dass** die Abdeckung (3) auf einem Komplex basiert, der Folgendes umfasst und damit aufeinanderfolgend miteinander verbunden ist:
• eine Überzugsschicht (9),
• eine Komfortunterschicht (10) aus weichem Schaumstoff,
• eine Trägerunterschicht (11) aus Strickware, auf der der elektrische Schaltkreis aufgedruckt ist.

3. Sitzpolster nach einem der Ansprüche 1 oder 2, **dadurch gekennzeichnet, dass** das Durchstechen entlang der gesamten Dicke der Abdeckung (3) erfolgt.

4. Sitzpolster nach einem der Ansprüche 1 bis 3, **dadurch gekennzeichnet, dass** der Verbindungsdraht (6) aus Metall ist.

5. Sitzpolster nach einem der Ansprüche 1 bis 3, **dadurch gekennzeichnet, dass** der Verbindungsdraht (6) auf einem mit Metall beschichteten Kunststoffmaterial basiert.

6. Sitzpolster nach einem der vorhergehenden Ansprüche, **dadurch gekennzeichnet, dass** das Durchstechen im Zickzack durchgeführt wird, um die Verbindung zwischen dem Draht (6) und dem Leitungsband (5) zu verstärken.

7. Sitzpolster nach einem der vorhergehenden Ansprüche, **dadurch gekennzeichnet, dass** die Rückseite der Abdeckung (3) auf einer Schutzschicht vorgesehen ist, die den Stromkreis (4) abdeckt.

8. Sitzpolster nach einem der Ansprüche 1 bis 7, **dadurch gekennzeichnet, dass** die Abdeckung (3) auf dem Polsterblock (2) aufgebracht ist.

9. Sitzpolster nach einem der Ansprüche 1 bis 7, **dadurch gekennzeichnet, dass** die Abdeckung (3) zumindest teilweise vom Polsterblock (2) überformt ist, wobei der Block auf Formschaum basiert.

10. Kraftfahrzeugsitz, der ein Sitzpolster nach einem der vorhergehenden Ansprüche umfasst, wobei das Sitzpolster auf einer Suspensionsmatte montiert ist, die fest mit dem Gestell des Sitzes verbunden ist.

## Claims

1. Cushion (1) for a motor vehicle seat, said cushion comprising:
- an elastically compressible padding block (2),
- a flexible cover (3) covering said block,
- an electrical circuit (4) based on conductive ink printed on the reverse side of said cover, said circuit comprising at least one electrically conductive strip (5),
- at least one conductive wire (6) for connecting said circuit to an electrical device, said wire having a portion (8) extending beyond said band so as to be connectable to said device,
said cushion being **characterized in that** said wire also has a portion (7) associated with said strip by needle-stitching, at a plurality of points (12), said portion through said strip.

2. Cushion according to claim 1, **characterized in that** the cover (3) is based on a complex comprising, associated successively with one another:
- a covering layer (9),
- a comfort underlayer (10) of flexible foam,
- a knitted backing underlayer (11) on which the electrical circuit is printed.

3. Cushion according to one of claims 1 or 2, **characterized in that** the stitching is made along the entire thickness of the cover (3).

4. Cushion according to any one of claims 1 to 3, **characterized in that** the connecting wire (6) is made of metal.

5. Cushion according to any one of claims 1 to 3, **characterized in that** the connecting wire (6) is based on a metal-coated plastic material.

6. Cushion according to any one of the preceding claims, **characterized in that** the stitching is made in zigzags so as to reinforce the association between the wire (6) and the conduction strip (5).

7. Cushion according to any of the preceding claims, **characterized in that** the reverse face of the cover (3) is provided with a protective layer covering the circuit (4).

8. Cushion according to any one of claims 1 to 7, **characterized in that** the cover (3) is fitted over the padding block (2).

9. Cushion according to any one of claims 1 to 7, **characterized in that** the cover (3) is overmolded, at least in part, by the padding block (2), said block being based on molded foam.

10. Motor vehicle seat comprising a cushion according to any one of the preceding claims, said cushion being mounted on a suspension ply integral with the frame of said seat.
